# EUROPEAN PATENT APPLICATION

(11) **EP 0 663 737 A2**
(43) Date of publication of application: **19.07.1995**
(21) Application number: 94119820.2
(22) Date of filing: 15.12.1994
(51) Int. Cl.: H04B 7/26, H04Q 7/28, H04Q 7/32

(54) **Mobile to mobile radio communicationssystem**

(30) Priority: 18.01.1994 GB 9400879
(71) Applicant: MOTOROLA LTD, Basingstoke, Hampshire RG22 4PD (GB)
(72) Inventor: Whinnett, Nicholas William, London SW11 1TH (GB); van den Heuvel, Anthony P., Windlesham, Surrey GU20 6HZ (GB)
(74) Representative: Dunlop, Hugh Christopher

(57) **Abstract**

A method as shown in FIG. 3 for communicating in a TDMA communications system where a plurality of mobile stations communicate directly to one another without the benefit of infrastructure, according to a plan of communication (30) and using the same coding scheme, modulation scheme, and channel definitions as a main TDMA communications system involving mobile to mobile communication via radio infrastructure. The method includes transmitting a hailing message (26) including synchronisation information over the predetermined frequency from an initiating mobile station to at least one mobile station.

In a preferred embodiment of the invention, the plan of communication includes frequency and time hopping.

## Description

### Field of the Invention

This invention relates in general to a method for communicating in a TDMA communications system where a plurality of mobile stations communicate directly to one another according to an identified plan of communication using the same coding scheme, modulation scheme, and channel definitions as a main TDMA communications system involving radio infrastructure.

### Background to the Invention

Trunked radio systems are well known and are generally referred to as communications systems that have a plurality of mobile stations that communicate via infrastructure. The infrastructure includes a base station and a system controller. The system controller may be located at the base station.

Radio communications systems make use of radio frequency communications channels for communication between the mobile stations and the base stations. Radio communications systems that make use of time division multiple access (TDMA) as an access mode are well known.

For the centrally controlled TDMA system, the mobile stations in the system will have access to a number of radio frequency carriers or carrier frequency pairs for communication, one or more of which may be available at each base site of the system. The carriers support control and traffic channels.

In TDMA communications systems a communication frequency or frequencies are divided into time frames and time slots. Mobile stations are assigned time slots to support their communication. The mobile stations communicate at their respective assigned time slots through the system controller of the radio communications system.

The system controller effectively minimises co-channel and adjacent channel interference by centrally providing synchronisation information, allocating communications resources and controlling transmitting power.

It is desired to have trunked mobile stations that are capable of communicating directly to one another without the benefit of infrastructure which is known as a direct mode operation. In direct mode the mobile station may communicate with one other mobile station or a plurality of mobile stations directly without communicating through a system controller. However, by eliminating the system controller in the communication arrangement there is no central controller to minimise interference or provide synchronisation.

Accordingly, it is desired to have a communications system including a plurality of mobile stations that have both a trunked mode of operation and a direct mode of operation where the direct mode of operation uses the same coding scheme, modulation scheme and channel definitions as the trunked mode of operation and has a means for minimising interference and a means for providing synchronisation.

### Summary of the Invention

According to the present invention, there is provided a method for communicating in a TDMA communications system where a plurality of mobile stations communicate directly to one another without the benefit of infrastructure, according to a plan of communication and using the same coding scheme, modulation scheme, and channel definitions as a main TDMA communications system involving mobile to mobile communication via radio infrastructure. The method includes transmitting a hailing message including synchronisation information over a predetermined frequency from an initiating mobile station to at least one mobile station.

In a preferred embodiment of the invention, the plan of communication includes frequency and time hopping.

### Brief Description of the Drawing

FIG. 1 shows a communication system in different operating modes.

FIG. 2 shows an example of frequency and time hopping according to the present invention.

FIG. 3 is a flow chart for a preferred embodiment of the present invention.

### Detailed Description of the Preferred Embodiment

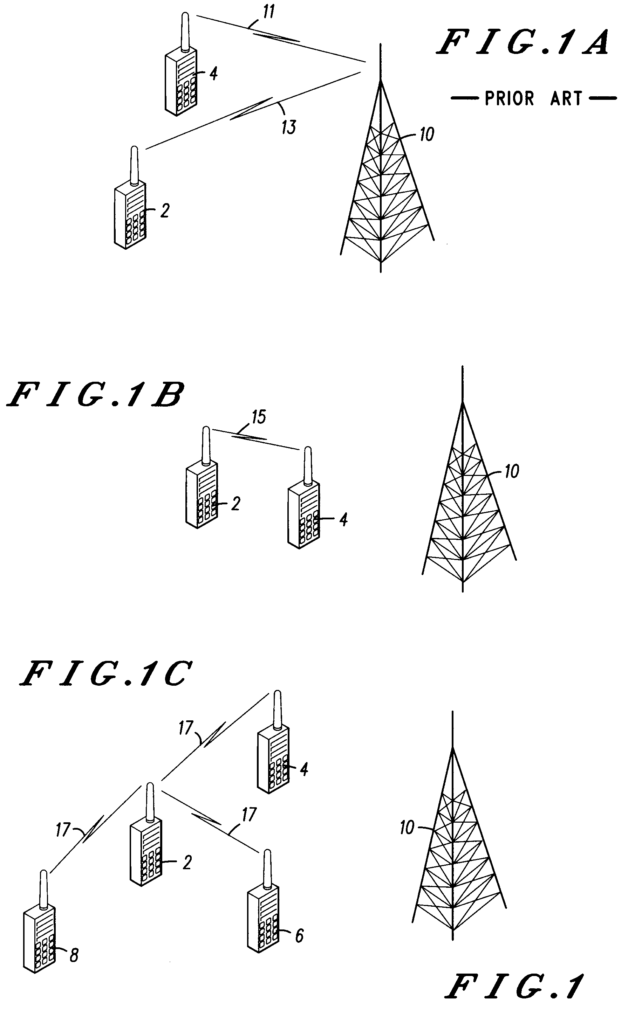

Referring to FIG. 1, there is shown three operating modes of mobile stations in a communication system. FIG. 1a shows typical trunked mode communication between two mobile stations 2, 4 over trunked communication channels 11, 13. The mobile stations 2, 4 communicate via a base station 10 which provides synchronisation and allocates the communications resources in a TDMA communications system.

FIG. 1b shows a direct mode communication between mobile stations 2, 4 whereby the mobile station 2, 4 communicate directly to one another without the benefit of the base station 10. FIG. 1c shows another direct mode communication where one mobile station 2 communicates directly to a number of mobile stations 4, 6, 8. Mobile stations that are able to operate in both direct mode and trunked mode are dual mode mobile stations.

The mobile stations and the base station communicate using a TDMA access mode. The direct mode mobiles communicate using the same frequencies, channel definitions, and modulation as the centrally controlled (system controller) TDMA trunked mode. Thus, a direct mode mobile may also employ the same time slot structure and coding schemes as in the centrally controlled TDMA trunked mode. Synchronisation may be provided by the mobile station that is initiating the communication (the initiating mobile station). The mobile station that is initiating the communication may simply pass synchronisation information to the receiving mobile station before communication is actually setup.

According to a preferred embodiment of the present invention, mobile stations communicating in direct mode pseudo randomly hop between available frequencies and available time slots on a per time slot basis, with independent hopping sequences being used for each pair of mobile stations or group of mobile stations in communication.

Frequency hopping is known in centrally controlled TDMA communications systems to reduce effects of multipath fading or non-deliberate jamming. Frequency hopping is also known in military radios to combat deliberate jamming or interception of radio signals. Frequency hopping is applied in the present invention to mobile stations communicating in a direct mode without the benefit of infrastructure.

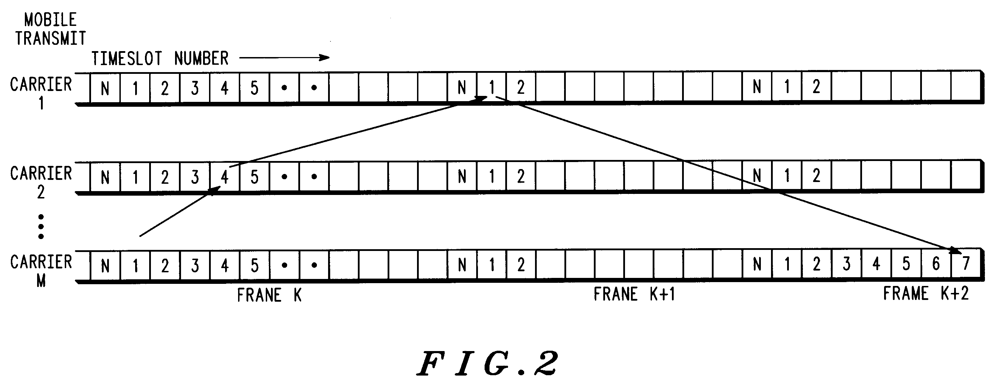

FIG. 2 shows a number of communications channels divided into time frames and time slots, 1-N. A frequency plan includes a map of frequencies and time slots to use in a communication between mobile stations whereby the mobile stations communicate according to the plan. For example, the mobile stations may hop as shown in FIG. 2. In time frame k, the mobiles communicate at time slot 4 on communication channel 2. In time frame k+1, the mobiles communicate at time slot 1 on communication channel 1. In time frame k+2, the mobiles communicate at time slot 1 on communication channel 7.

In a communication system where the mobile stations are communicating in a direct mode according to a frequency and time hopping plan the probability of significant interference at one mobile station due to transmissions from other mobile stations will be small, and a bit error rate (after de-interleaving and error correction decoding) will be low even if there is a nearby mobile station which is also transmitting. The hopping avoids the case where a pair of mobile stations are unable to communicate due to the presence of a nearby mobile station transmitting at the same time on the same or adjacent channels.

To enable the setup of a call, each mobile station or group of mobile stations will have an identity and a dedicated starting frequency for the hopping sequence. The starting frequencies could be the same or different for each mobile station or group of mobile stations. When the starting frequencies are the same, once a communication has been set up, the starting frequency could be used less often during communication than the other available frequencies to reduce the probability of interference during call setup for other mobile stations.

A mobile station initiating a call must know the receiving mobile station's identity and starting frequency or group's identity and starting frequency. The initiating mobile station will send the synchronisation and signalling messages on the starting frequency carrier to the receiving mobile stations. This may be repeated to reduce the probability of blocking due to another mobile station temporarily hopping onto the starting frequency carrier. The receiving mobile stations, after obtaining frequency and timing synchronisation with the initiating mobile station, will recognise its identity and will respond thus enabling call setup.

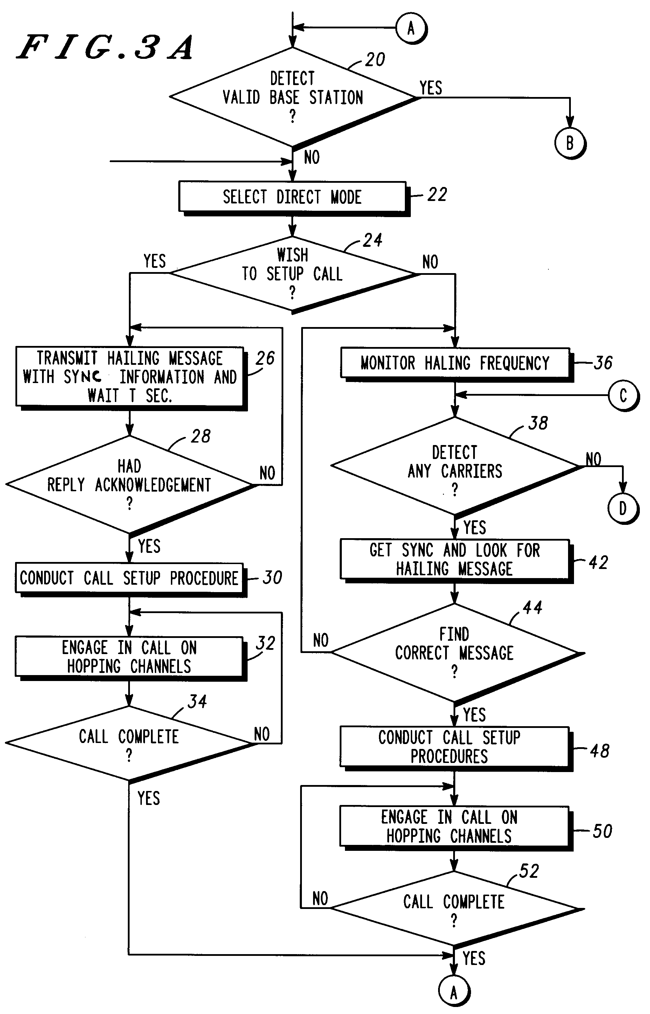

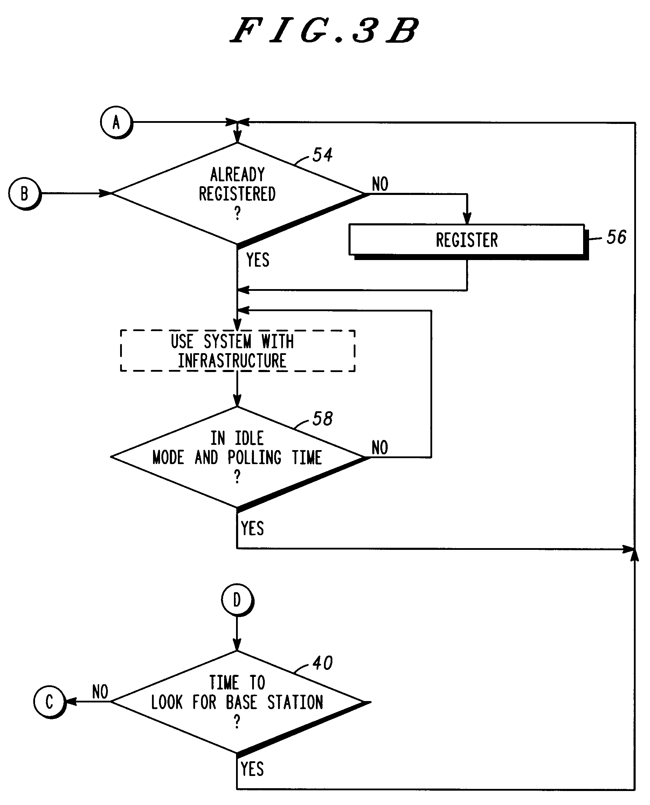

FIG. 3 shows a flow chart for a preferred embodiment of the present invention. The flow chart is an example of how a dual mode mobile station operates according to a preferred embodiment of the present invention. A mobile station attempts to communicate with a valid base station as in step 20. If the mobile base station cannot communicate with a valid base station, for instance, when the mobile station is out of transmitting range or there is a network problem, the mobile station selects to communicate in a direct mode operation as in step 22. Alternatively, a mobile station may simply desire to communicate directly to at least one other mobile station within transmitting range and avoid communicating through the base station. Thus, the mobile station may simply select direct mode as in step 22. The mobile station may select direct mode manually such as by a conventional switch mechanism on his mobile station or the mobile station may automatically switch into direct mode when it unable to communicate to a valid base station.

If the mobile station desires to set up a call, step 24, the mobile station (initiating mobile station) transmits a hailing message on a predetermined frequency and waits for a response for a period of time as in step 26. The hailing message includes synchronisation information and may include a request for communication from the initiating mobile station for a specific mobile station or a selected group of mobile stations. The predetermined frequency may be associated with particular mobile stations' identities.

If the mobile station has not received a reply in a predetermined period of time the mobile station may choose to transmit another hailing message and wait again, step 28. If the initiating mobile station receives a reply from the other mobile station call procedures at step 30 may be set up between the communicating mobile stations. Particularly, a frequency and time hopping plan is decided on or simply passed from the initiating mobile station to the other communicating mobile stations as in step 32. The communication then continues according to the frequency and time hopping plan, step 32, until the call is completed, step 34.

If the direct mode mobile station does not wish to set up a call it monitors a predetermined frequency over which hailing messages may be transmitted by other mobile stations to the monitoring mobile station as in step 36. If the monitoring mobile station does not detect any communication on the predetermined frequency it may simply continue monitoring the predetermined frequency or attempt to communicate with a base station as in step 40.

If the monitoring mobile station does receive a communication on the predetermined frequency the monitoring receives the synchronisation information and looks for the hailing message as in step 42. If the hailing message requests the monitoring mobile station for communication then call setup and conduct procedures are established and the monitoring mobile station receives the frequency and time hopping plan from an initiating mobile as in step 48. Alternatively, any mobile station may provide a plan of communication as long as the plan of communication is agreed upon by the initiating mobile station as well as other mobile stations involved in the particular communication. The mobile stations then communicate according to the communication plan, step 50, until the call is completed, step 52.

When the direct mode call is completed the mobile station may desire to no longer operate in direct mode and attempt to communicate with a valid base station, step 20. If the mobile station detects a valid base station then the mobile station may communicate as already known in typical base station system environment. For example, the mobile station must register with the base station if it had not already registered, steps 54 and 56. Then the mobile station communicates in the system via infrastructure. The mobile station may then operate in idle mode, step 58.

Thus, there is provided a dual mode mobile station with the ability to monitor both direct mode communications signals and communications signals from the system controller of the trunked radio system. The same mobile equipment may be used in both environments without needing to add circuitry or components. Synchronisation and communication plans are provided by an initiating mobile station to enable direct mode communication according to the TDMA communications system employed by the system controller.

## Claims

1. A method for communicating in a TDMA communications system including a plurality of mobile stations that communicate directly to one another without the benefit of infrastructure using the same coding scheme, modulation scheme, and channel definitions as a main TDMA communications system involving mobile to mobile communication via radio infrastructure, the method for communicating comprising the steps of:
transmitting a hailing message including synchronisation information over the predetermined frequency from an initiating mobile station to at least one mobile station; and
monitoring a predetermined frequency by the at least one mobile station;
identifying a plan of communication by one of the mobile stations for the mobile stations to communicate thereby.

2. The method of claim 1 wherein the step of transmitting a hailing message includes requesting communication with the at least one mobile station by the initiating mobile station.

3. The method of claim 2 further comprising the step of:
acknowledging request for communication by the at least one mobile station.

4. A method for communicating in a TDMA communications system including a plurality of mobile stations that communicate directly to one another without the benefit of infrastructure using the same coding scheme, modulation scheme and channel definitions as a main TDMA communications system involving mobile to mobile communication via radio infrastructure, the method for communicating comprising the steps of:
transmitting synchronisation information over the predetermined frequency from a second mobile station to a first mobile station;
monitoring a predetermined frequency by the first mobile station;
requesting communication with the first mobile station by the second mobile station;
acknowledging request for communication by the first mobile station; and
identifying a plan of communication by one of the mobile stations for the first and second mobile station to communicate thereby.

5. The method of any preceding claim wherein the predetermined frequency is a frequency known by the initiating mobile station as being associated with the first mobile station's identity.

6. The method of any preceding claim wherein the plan of communication is a frequency hopping plan.

7. The method of any preceding claim wherein the plan of communication is a time slot hopping plan.

8. The method of any preceding claim wherein the frequency plan of communication comprises frequencies other than the predetermined frequency.

9. The method of any preceding claim further comprising the step of monitoring signals from a system controller of the TDMA communication system by the mobile station monitoring the predetermined frequency.

10. A method for communicating in a TDMA communications system including a plurality of mobile stations that communicate directly to one another without the benefit of infrastructure using the same coding scheme, modulation scheme and channel definitions as a main TDMA communications system involving mobile to mobile communication via radio infrastructure substantially as herein described with reference to FIG. 3 of the drawing.
